(19) **Europäisches Patentamt**
**European Patent Office**
**Office européen des brevets**

(11) **EP 4 687 262 A1**

(12) **EUROPEAN PATENT APPLICATION**

(43) Date of publication:
**04.02.2026 Bulletin 2026/06**

(21) Application number: **25192356.1**

(22) Date of filing: **29.07.2025**

(51) International Patent Classification (IPC):
***H02J 7/00*** (2026.01)  ***H02J 50/10*** (2016.01)
***H02J 50/80*** (2016.01)

(52) Cooperative Patent Classification (CPC):
**H02J 50/80; H02J 7/00034; H02J 50/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.08.2024 IN 202441058865**

(71) Applicant: **NXP B.V.**
**5656 AG Eindhoven (NL)**

(72) Inventors:
• **Ahammed, Anish**
**5656AG Eindhoven (NL)**
• **Desai, Jayaprakash**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **SYSTEM AND METHOD FOR WIRELESS CHARGING OF DEVICES**

(57)    A charging system is disclosed. The charging system includes multiple charging circuits to simultaneously charge chargeable devices in proximity of the charging system. The charging circuits establish wireless communications associated with charging of the chargeable devices. Due to simultaneous wireless communications, a cross-talk interference leads to an error in at least one of the wireless communications. Upon detecting the error, the corresponding charging circuit generates a delay value. After a time delay that is based on the delay value, the charging circuit reestablishes the wireless communication with the chargeable device thereby mitigating the crosstalk interference. The charging circuit charges the chargeable device upon successful reestablishment of the wireless communication.

100

FIG. 1

**Description**

FIELD OF USE

The present disclosure relates generally to charging and, more particularly, to a system and method for wireless charging of devices.

BACKGROUND

Near-field communication (NFC) is a short-range wireless technology that enables the exchange of data and/or power over a distance of a few centimeters. NFC is commonly used in contactless payment systems, data transfer, or the like. One of the recent applications of NFC is wireless charging. An NFC-enabled wireless charger often includes multiple charging circuits that initiate a charging process to charge devices that are in proximity. As the charging circuits simultaneously charge the devices, the charging of the devices may be affected due to cross-channel interference. In addition, the charging of one or more devices may come to a halt.

BRIEF DESCRIPTION OF DRAWINGS

The following detailed description of the embodiments of the present disclosure will be better understood when read in conjunction with the appended drawings. The present disclosure is illustrated by way of example, and not limited by the accompanying figures, in which like references indicate similar elements.

FIG. 1 illustrates a schematic diagram of a charging environment in accordance with an embodiment of the present disclosure;
FIG. 2 illustrates a schematic block diagram of a charging circuit of the charging environment of FIG. 1 in accordance with an embodiment of the present disclosure;
FIGS. 3A-3C are timing diagrams that illustrate exemplary scenarios of simultaneously charging chargeable devices of the charging environment of FIG. 1 in accordance with an embodiment of the present disclosure; and
FIGS. 4A-4C, collectively, represents a flowchart that illustrates a wireless charging method executed by charging circuits of the charging environment of FIG. 1 in accordance with an embodiment of the present disclosure.

DETAILED DESCRIPTION

The detailed description of the appended drawings is intended as a description of the embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

Overview:

A near-field communication (NFC) wireless charger typically includes multiple charging circuits that simultaneously charge chargeable devices in proximity of the charging circuits. To charge a device, a charging circuit of the NFC charger may establish a wireless communication with the device. During the wireless communication, the charging circuit may request device information associated with charging of the device. The device may provide the device information via responses. As multiple wireless communications are simultaneously established between the charging circuits and the devices, the wireless communications may be affected by cross-talk interference. Thus, efficiency of charging the devices is compromised.

Conventional error recovery mechanisms to recover from cross-talk effects involve reinitiating the charging process after a static (e.g., fixed) time duration. However, upon reinitiating the charging process after the fixed time duration, the wireless communication may still be affected due to cross-talk thereby resulting in poor or failed charging of the devices.

Approaches to optimally charge devices simultaneously may include adequately spacing each of the charging circuits or separating each charging circuit by a physical shield to reduce the interference that affects the wireless communication. However, the aforementioned solutions may be challenging to implement due to space and cost constraints.

Further approaches to reduce the effects of cross-talk interference may include managing the timing of the wireless communications between each of the charging circuits with the corresponding device by way of a control circuit of the wireless charger. The timing of the wireless communication may be managed by synchronizing the wireless communication between the charging circuits and the corresponding device. However, to synchronize the timing of each wireless communication, each of the charging circuits may have to be physically connected with the control circuit thereby resulting in an increase in a cost of the wireless charger. In addition, when the charging devices are charged one at a time, the effects of cross-talk interference may be mitigated. However, such techniques lead to an increase in an overall time duration of the charging process for all the devices, and thus cause inconvenience to a user associated with the device.

Various embodiments of the present disclosure disclose a charging system (such as a wireless charger). The charging system may include a set of charging circuits that may charge a corresponding set of chargeable devices by establishing wireless communications with the corresponding chargeable device. The charging circuit may detect an error in at least one of the wireless communications based on cross-talk interference that may occur due to simultaneous wireless communications. A delay value (e.g., a random value) may be generated by the corresponding charging circuit based on the error detected in the wireless communication. After a time delay that may be based on the delay value, the charging circuit may reestablish the wireless communication with the chargeable device. The charging circuit may charge the chargeable device based on the wireless communication being successful upon reestablishment.

Thus, the present disclosure significantly reduces the error probability due to cross-talk interference in a wireless communication between the charging circuit and the chargeable device by reestablishing the wireless communication between one or more charging circuits and the corresponding chargeable devices according to a random delay timing. The charging system refrains from including any additional hardware to physically shield the charging circuits thereby avoiding any increase in hardware cost. In addition, as the charging circuits are simultaneously able to charge the chargeable devices, the overall charging efficiency of the charging system of the present disclosure is improved over conventional techniques that suggest charging of each device one at a time or manage the charging timing for each device.

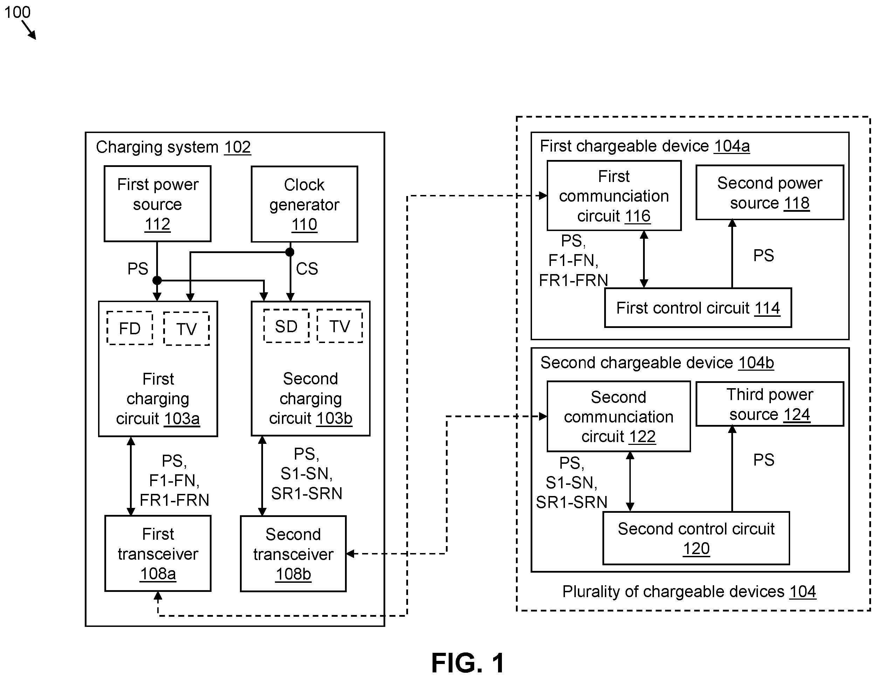

FIG. 1 illustrates a schematic diagram of a charging environment 100 in accordance with an embodiment of the present disclosure. The charging environment 100 may include a charging system 102 and a plurality of chargeable devices 104. The charging system 102 may include a plurality of charging circuits 103. The plurality of charging circuits 103 are shown to include a first charging circuit 103a and a second charging circuit 103b. Further, the plurality of chargeable devices 104 is shown to include a first chargeable device 104a and a second chargeable device 104b. In one embodiment, the charging environment 100 may be a near-field communication (NFC) charging environment. NFC is a short-range wireless technology that enables exchange of data and/or power between NFC devices over a distance of a few centimeters.

The charging environment 100 may enable wireless charging of at least one of the plurality of chargeable devices 104 by one of the plurality of charging circuits 103 when a chargeable device is within a proximity of a corresponding charging circuit of the charging system 102. The proximity may be a predetermined area such that the charging circuit may detect the presence of a chargeable device within the proximity. In an exemplary embodiment, the predetermined area may be 9 square centimeters ($cm^2$). Further, the predetermined area may be defined based on a communication range of NFC.

Plurality of charging circuits 103:

Each of the plurality of charging circuits 103 may be configured to control a charging process of a corresponding chargeable device based on proximity between the chargeable device and the charging circuit. A charging process may correspond to (i) a wireless communication such as exchange of requests and responses associated with charging of the chargeable device, between the charging circuit and the corresponding chargeable device and (ii) wireless charging of the chargeable device by the charging circuit. In one scenario, the charging process of a chargeable device may further be controlled based on prior detection of the chargeable device by one of the plurality of charging circuits 103 with respect to the remaining charging circuits of the plurality of charging circuits 103. In further scenarios, the charging process of a corresponding chargeable device may further be controlled based on the establishment of the wireless communication by one of the plurality of charging circuits 103 with the chargeable device prior to the remaining charging circuits of the plurality of charging circuits 103. In further scenarios, one of the plurality of charging circuits 103 may randomly establish the wireless communication with a chargeable device of the plurality of chargeable devices 104.

A time duration associated with a wireless communication may be lower than a time duration to wirelessly charge the chargeable device. In an example, the time duration for the wireless communication may be 20% and the time duration to wirelessly charge the chargeable device may be 80%. The wireless communication and the wireless charging may be based on NFC. In an example, each of the plurality of charging circuits 103 may be pollers configured to generate poller command signals, while each of the chargeable devices 104 may be listeners with respect to the charging operation and may be configured to decode the poller command signals and to provide a response.

The charging system 102 may further include a plurality of transceivers 108, a clock generator 110, and a first power source 112. Each of the plurality of charging circuits 103 may be coupled to the clock generator 110, the first power source 112, and a corresponding transceiver of the plurality of transceivers 108. The plurality of transceivers 108 are shown to include a first transceiver 108a and a second transceiver 108b. The first charging circuit 103a may be coupled to the first transceiver 108a, and the second charging circuit 103b may be coupled to the second transceiver 108b. In one or more embodiments, the plurality of transceivers 108 may be implemented as inductors. Each inductor may be configured to selectively generate a magnetic field to communicate power and data to an inductor of a corresponding chargeable device.

Although FIG. 1 illustrates that the charging system 102 includes two charging circuits (e.g., the first charging circuit 103a and the second charging circuit 103b), the scope of the present disclosure is not limited to it. In one or more embodiments, the charging system 102 may include more than two charging circuits without deviating from the scope of the present disclosure.

Although FIG. 1 illustrates that the charging environment 100 includes two chargeable devices (e.g., the first chargeable device 104a and the second chargeable device 104b), the scope of the present disclosure is not limited to it. In one or more embodiments, the charging environment 100 may include more than two chargeable devices, without deviating from the scope of the present disclosure.

For the sake of simplicity, the operation of the first charging circuit 103a is explained in detail in the ongoing description. As an operation of the remaining plurality of charging circuits 103 (such a set of charging circuits, e.g., the second charging circuit 103b) is similar to an operation of the first charging circuit 103a, the operation of the remaining plurality of charging circuits 103 will be understood by a person skilled in the art.

First charging circuit 103a:

The first charging circuit 103a may include suitable circuitry that may be configured to perform one or more operations. For example, the first charging circuit 103a may be configured to establish a first wireless communication with the first chargeable device 104a that may be associated with charging the first chargeable device 104a. The first charging circuit 103a may establish the first wireless communication upon detecting the first chargeable device 104a to be within the proximity of the charging system 102 (e.g., the charging circuit 103a). The first charging circuit 103a may be coupled to the clock generator 110, the first power source 112, and the first transceiver 108a.

To establish the first wireless communication with the first chargeable device 104a, the first charging circuit 103a may be further configured to generate one or more first setup requests F1-FN. The one or more first setup requests F1-FN may include queries and requests associated with the charging of the first chargeable device 104a. For example, the one or more first setup requests F1-FN may include a first setup request F1, a second setup request F2, and a third setup request F3. The first setup request F1 may include queries to receive authentication data to authenticate the first chargeable device 104a. The second setup request F2 may include queries to receive information indicative of the amount of charge required by the first chargeable device 104a. Further, the third setup request F3 may request data associated with a power transfer limit such as a voltage limit and a current limit, of the first chargeable device 104a to ensure compatibility and safety of the first chargeable device 104a during charging.

The first charging circuit 103a may be further configured to transmit the one or more first setup requests F1-FN to the first chargeable device 104a by way of the first transceiver 108a. Upon transmitting the one or more first setup requests F1-FN to the first chargeable device 104a, the first chargeable device 104a may be further configured to await reception of one or more first setup responses FR1-FRN from the first chargeable device 104a until an end of a first time period. A duration of the first time period may be determined based on NFC communication standards. The one or more first setup responses FR1-FRN may include a set of responses based on the queries and requests included in the one or more first setup requests F1-FN. For example, the one or more first setup responses FR1-FRN may include a first setup response FR1, a second setup response FR2, and a third setup response FR3. The first setup response FR1 may include information based on the first setup request F1 (e.g., the first setup response FR1 may provide authentication data that may include the model number of the first chargeable device 104a), a second setup response FR2 may include a value associated with the amount of charge required by the first chargeable device 104a, and a third setup response FR3 may include the power transfer and current limits associated with charging of the first chargeable device 104a.

In one or more embodiments, a failure to receive the one or more first setup responses FR1-FRN by the first charging circuit 103a at the end of the first time period may indicate an error in the first wireless communication. The failure may be due to interference, such as cross-talk interference, electromagnetic interference, other sources of interference, or any combination thereof. Cross-talk interference may occur when at least two charging circuits simultaneously establish wireless communications with corresponding chargeable devices. In one scenario, the cross-talk interference may occur during the transmission of the one or more first setup responses FR1-FRN from the first chargeable device 104a to the first charging circuit 103a. The cross-talk interference may affect the quality of the one or more first setup requests F1-FN such that the first chargeable device 104a may be unable to decode the one or more first setup requests F1-FN for generating the one or more first setup responses FR1-FRN. Thus, the first charging circuit 103a may be unable to receive the one or more first setup responses FR1-FRN at an end of the first time period thereby leading to a loss of the one or more first setup responses FR1-FRN.

In one or more embodiments, the first charging circuit 103a may be further configured to receive the one or more first setup responses FR1-FRN within the first time period. Thus, the first charging circuit 103a may be further configured to initiate decoding of the one or more first setup responses FR1-FRN. In an example, the decoding may be executed by algorithms that may include performing one or more mathematical operations such as addition and bitwise operations on the one or more first setup responses FR1-FRN. The algorithm may be based on the type of decoding standard that is followed to decode the one or more first setup responses FR1-FRN. Examples of the decoding standards that may be used in wireless fidelity (Wi-Fi) and radio frequency identification (RFID) technologies may include quadrature amplitude modulation (QAM) decoding and phase shift keying (PSK) decoding.

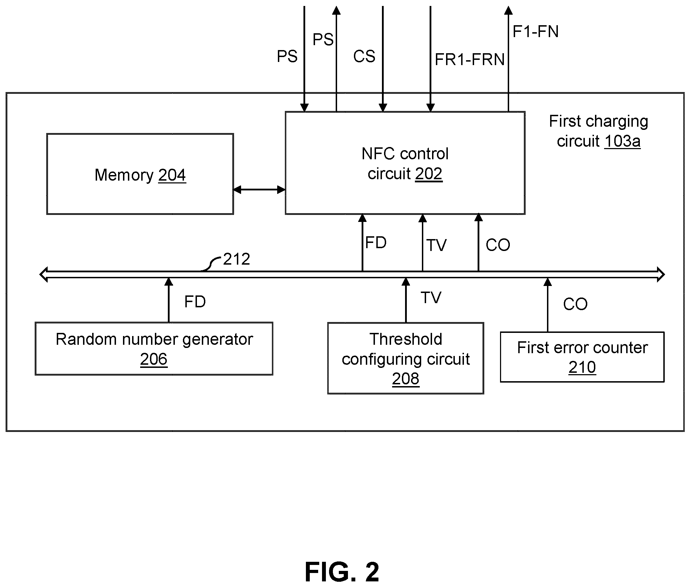

In one scenario, upon initiating decoding of the one or more first setup responses FR1-FRN, the first charging circuit 103a may be unable to decode the one or more first setup responses FR1-FRN. Thus, the first charging circuit 103a may be further configured to detect the error in the first wireless communication. In further scenarios, upon initiating decoding of the one or more first setup responses FR1-FRN, the first charging circuit 103a may inaccurately decode the one or more first setup responses FR1-FRN. The inaccuracy in decoding may occur due to the one or more first setup responses FR1-FRN being corrupted. The one or more first setup responses FR1-FRN may be corrupted due to one of collision error, framing error, incomplete byte error, or the like that may occur during reception of the one or more first setup responses FR1-FRN. The first charging circuit 103a may thus be further configured to detect the error in the first wireless communication. The first charging circuit 103a may further identify that the error may be indicative of the cross-talk interference in the first wireless communication from at least one of the plurality of charging circuits 103 (e.g., the second charging circuit 103b), as explained in FIG. 2.

In further exemplary scenarios, the first chargeable device 104a may inaccurately decode the one or more first setup requests F1-FN and generate the one or more first setup responses FR1-FRN with inaccurate data due to cross-talk interference during the transmission of the one or more first setup requests F1-FN. Upon receiving the one or more first setup responses FR1-FRN with inaccurate data within the first time period, the first charging circuit 103a may be unable to or inaccurately decode the one or more first setup responses FR1-FRN. Thus, the first charging circuit 103a may detect the error in the first wireless communication.

The first charging circuit 103a may be further configured to increment a first error counter of the first charging circuit 103a upon detecting the error in the first wireless communication. A count (as shown in FIG. 2) of the first error counter may indicate a frequency of detecting the error in the first wireless communication. For example, the count may be two. Thus, the first charging circuit 103a may have detected the error twice in the first wireless communication. The dual detection of error may indicate that the first wireless communication has been established twice (e.g., a previous establishment and a current establishment) with the first chargeable device 104a. The first charging circuit 103a may be further configured to compare the count to a threshold value TV. The threshold value TV may indicate a total number of attempts that may be acceptable to reestablish the first wireless communication by the first charging circuit 103a. Further, the first charging circuit 103a may reboot when the count exceeds the total number of attempts.

In one or more embodiments, the threshold value TV may be defined based on a type of chargeable device (such as the first chargeable device 104a) that may be identified upon initial establishment of the first wireless communication. For example, the threshold value TV for earphones as the first chargeable device 104a may be lower than the threshold value TV of hearing pads as the first chargeable device 104a. Thus, the total number of acceptable attempts (e.g., the threshold value TV) for earphones may be three, whereas the total number of acceptable attempts (e.g., the threshold value TV) for hearing pads may be five. In one or more embodiments, the threshold value TV may be randomly defined. The threshold value TV may be defined by a threshold configuring circuit of the first charging circuit 103a as explained shown in FIG. 2.

The first charging circuit 103a may be further configured to compare the count of the first error counter with the threshold value TV and determine whether the count is below the threshold value TV. In one or more embodiments, the first charging circuit 103a may generate a first delay value FD upon determining that the count is lower than or equal to the threshold value TV. The first delay value FD may be a random value. In an example, the first delay value FD may be an integer value, a binary value, a hexadecimal value, or the like. The generation of the first delay value FD is explained in FIG. 2. During the generation of the first delay value FD, the first charging circuit 103a may be further configured to transmit a carrier signal to communicate with the corresponding chargeable device of the plurality of chargeable devices 104. The first carrier signal may further ensure that the first wireless communication is active between the first charging circuit 103a and the first chargeable device 104a.

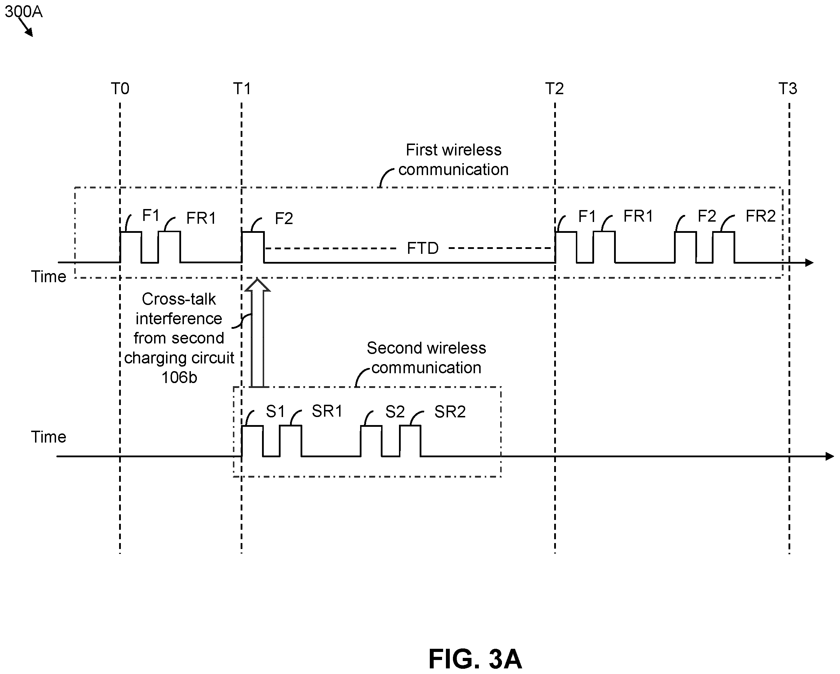

The first charging circuit 103a may be further configured to determine a first time delay (shown in FIG. 3A) based on the first delay value FD and a time duration that may be required by the first charging circuit 103a to perform one or more tasks to reestablish the first wireless communication. The tasks may include execution of one or more codes associated with the reestablishment of the first wireless communication.

In one or more embodiments, the time duration may be defined based on a type of chargeable device (such as the first chargeable device 104a) that may be identified upon initial establishment of the first wireless communication. For example, the time duration for earphones as the first chargeable device 104a may be lower than a time duration of hearing pads as the first chargeable device 104a. Thus, the time duration for earphones may be 3 seconds, whereas the time duration for hearing pads may be 5 seconds. In further embodiments, the time duration may be randomly defined.

The first time delay may be a multiple of the time duration based on the first delay value FD. For example, the first time delay may be 10 seconds when the time duration is 5 seconds and the first delay value FD is 2. In one or more embodiments, a fixed time delay may be multiplied with the first delay value FD to produce the first time delay.

The first charging circuit 103a may be further configured to reestablish the first wireless communication with the first chargeable device 104a after the first time delay. In one embodiment, the first charging circuit 103a may be configured to charge the first chargeable device 104a based on the first wireless communication being successful upon reestablishment. As the reestablishment of the first wireless communication occurs after the first time delay (that may be a random time delay), the probability of cross-talk interference due to simultaneous wireless communications being established by at least one of the remaining charging circuits of the plurality of charging circuits 103 is reduced. The probability of error (p) based on the cross-talk interference detected by the first charging circuit 103a in the first wireless communication may be determined by equation (1):

$$\text{probablity (p)} = \left(\frac{1}{5}\right) * \frac{T1}{N*PD} \tag{1}$$

where T1 may indicate a time period of the first wireless communication,

PD may indicate the time duration associated with the reestablishment of the first wireless communication, and

N may indicate the first delay value FD generated by the first charging circuit 103a upon detection of the error.

Thus, based on the first delay value FD, the probability of error is reduced by further increasing a range of the first delay value FD that may be generated by the first charging circuit 103a. In an example, T1 is equal to the time duration. Further, N (e.g., the first delay value FD) may be an integer between 1 and 5. Thus, the probability of error (p) maybe $\frac{1}{5} * \frac{1}{5} * 1 = 4\%$. Further, when N (e.g., the first delay value FD) may be an integer between 1 and 10, the probability of error (p) is further reduced.

To reestablish the first wireless communication, the first charging circuit 103a may generate and transmit the one or more first setup requests F1-FN. In a scenario, the first charging circuit 103a may regenerate the one or more first setup requests F1-FN. In further scenarios, the one or more first setup requests F1-FN may be generated based on a previous establishment of the first wireless communication (e.g., the one or more first setup requests F1-FN transmitted during the previous establishment of the first wireless communication). In an example, the error may occur in the transmission of the second setup request F2 during the establishment of the first wireless communication. Thus, the first charging circuit 103a may generate and transmit the second setup request F2 during the reestablishment as compared to regenerating the first setup request F1 as the received response to the first setup request F1 may be stored in the memory (shown in FIG. 2) of the first charging circuit 103a. In further scenarios, the first charging circuit 103a may transmit the second setup request F2 after a time delay that is subsequent to transmission of the first setup request F1. Further, the second request F2 may be transmitted upon receiving the first setup response FR1 to the first setup request F1. In one or more embodiments, the time delay may be a predetermined time period based on NFC communication standards where the first charging circuit 103a may transmit the remaining setup requests of the one or more first setup requests F1-FN upon receiving responses of the previous setup requests of the one or more first setup requests F1-FN. The transmission of the second setup request F2 may be delayed by the time delay to ensure the stability of the first wireless communication.

In one or more embodiments, the first charging circuit 103a may be further configured to receive the one or more first setup responses FR1-FRN from the first chargeable device 104a in response to the transmission of the one or more first setup requests F1-FN within the first time period upon reestablishing the first wireless communication. Upon successfully decoding the one or more first setup responses FR1-FRN, the first charging circuit 103a may charge the first chargeable device 104a. The successful decoding of the one or more first setup responses FR1-FRN by the first charging circuit 103a may be indicative of the first wireless communication being successful.

For the sake of simplicity, it is assumed that the reestablishment of the first wireless communication is successful upon a failure of the establishment of the first wireless communication. In scenarios where the reestablishment of the first wireless communication fails, it will be understood by a person skilled in the art that the first charging circuit 103a may repeat the process of reestablishing the first wireless communication. Each time the first charging circuit 103a attempts to reestablish the first wireless communication, the first charging circuit 103a may increment the first error counter. The number of reestablishments of the first wireless communication may be based on the count of the first error counter and until the reestablishment of the first wireless communication is successful.

In further embodiments, when the count of the first error counter is determined to exceed the threshold value TV, the first charging circuit 103a may be further configured to reboot. The first charging circuit 103a may be further configured to reset the count of the first error counter to a default value. Based on the default value, the attempts by the first charging circuit 103a in reestablishing the first wireless communication due to the error may be determined by subtracting the count of the first error counter with the default value. For example, the attempts to reestablish the first wireless communication by the first charging circuit 103a is two when the value of the default value is one and the value of the first error counter is three.

While in the above-discussion, the failure in the first wireless communication is discussed with respect to cross-talk interference, it should be appreciated that the failure may be due to any type of interference. For example, the failure may be based on environmental interference, electromagnetic interference, other interference sources, or any combination thereof.

In further embodiments, the first charging circuit 103a may establish one or more wireless communications with the first chargeable device 104a during the charging of the first chargeable device 104a to ensure a smooth charging process of the first chargeable device 104a. The requests and responses exchanged in the one or more wireless communications may be similar to the first wireless communication.

Second charging circuit 103b:

The second charging circuit 103b may be structurally and functionally similar to the first charging circuit 103a. The second charging circuit 103b may be coupled to the clock generator 110, the first power source 112, and the second transceiver 108b. The second charging circuit 103b may include suitable circuitry that may be configured to perform one or more operations. For example, the second charging circuit 103b may be associated with a set of charging circuits that may be configured to control charging of a corresponding set of chargeable devices (e.g., the second chargeable device 104b) based on a set of delay values (e.g., a second delay value SD). The second charging circuit 103b may be configured to establish a second wireless communication with the second chargeable device 104b. The second charging circuit 103b may establish the second wireless communication upon detecting the second chargeable device 104b to be within the proximity of the charging system 102 (e.g., the second charging circuit 103b).

To establish the second wireless communication with the second chargeable device 104b, the second charging circuit 103b may be further configured to generate one or more second setup requests S1-SN. The one or more second setup requests S1-SN may be similar to the one or more first setup requests F1-FN. The second charging circuit 103b may be further configured to transmit the one or more second setup requests S1-SN to the second chargeable device 104b by way of the second transceiver 108b. The second charging circuit 103b may be further configured to receive one or more second setup responses SR1-SRN from the second chargeable device 104b in response to the transmission of the one or more second setup requests S1-SN by way of the second transceiver 108b. The one or more second setup responses SR1-SRN may include a set of responses based on queries included in the one or more second setup requests S1-SN.

The second charging circuit 103b may be further configured to initiate decoding of the one or more second setup responses SR1-SRN by executing an algorithm on the one or more second setup responses SR1-SRN. The second charging circuit 103b may decode the one or more second setup responses SR1-SRN in a similar manner as the first charging circuit 103a. The second charging circuit 103b may be further configured to detect an error in the second wireless communication that may be indicative of the cross-talk interference from at least one of the remaining charging circuits of the plurality of charging circuits 103. For the sake of simplicity, it is assumed that the error may occur due to cross-talk interference from the first charging circuit 103a; however, the error may be due to interference from any number of sources, as previously indicated. Additionally, it is assumed that the received second setup responses SR1-SRN are affected due to the cross-talk interference. The detection of an error in the second wireless communication may be similar to the detection of the error in the first wireless communication.

The second charging circuit 103b may be further configured to increment a count of a second error counter upon detecting the error in the second wireless communication. The second charging circuit 103b may be further configured to compare the count of the second error counter to the threshold value TV. The second charging circuit 103b may be further configured to determine whether the count of the second error counter is below the threshold value TV based on the comparison of the second error counter and the threshold value TV. The second charging circuit 103b may be further configured to generate the second delay value SD of the set of delay values upon determining whether the count of the second error counter is lower than or equal to the threshold value TV. The second delay value SD may be different than the first delay value FD. For example, the second delay value SD may be less than or greater than the first delay value FD. Thus, both the first wireless communication and the second wireless communication may be reestablished at different time instances by the first charging circuit 103a and the second charging circuit 103b, respectively. An effect of cross-talk interference is thereby mitigated.

The second charging circuit 103b may be further configured to determine a second time delay based on the second delay value SD and a time duration that may be required by the second charging circuit 103b to perform one or more tasks to reestablish the second wireless communication. The time duration that may be required by the second charging circuit 103b may be identical to the time duration that may be required by the first charging circuit 103a. The second time delay may be a multiple of the time duration based on the second delay value SD. The first time delay and the second time delay may be different based on the first delay value FD (shown in FIG. 2) and the second delay value SD. For example, the time duration required by the first charging circuit 103a and the second charging circuit 103b may be 5 seconds. When the first delay value FD may be 2 and the second delay value SD may be 3 seconds, the time delay may be determined by multiplying the determined delay value by the time duration (e.g., the first time delay may be 10 seconds and the second time delay may be 15 seconds).

The second charging circuit 103b may be further configured to reestablish the second wireless communication with the second chargeable device 104b by way of the second transceiver 108b. In an embodiment, the second charging circuit 103b may be further configured to await the one or more second setup responses SR1-SRN based on the transmission of the one or more second setup requests S1-SN for a second time period. The second time period may be similar to the first time period. The second charging circuit 103b may be configured to charge the second chargeable device 104b based on the reestablished second wireless communication being successful. In further embodiments, the second charging circuit 103b may be further configured to reboot and reset the second error counter when the count of the second error counter may exceed the threshold value TV. The second wireless communication may be established upon rebooting.

Although it is mentioned that the first charging circuit 103a may control the charging process of the first chargeable device 104a and the second charging circuit 103b may control the charging process of the second chargeable device 104b, the scope of the present disclosure is not limited to it. In further embodiments, the first charging circuit 103a may control the charging process of the second chargeable device 104b, and the second charging circuit 103b may control the charging process of the first chargeable device 104a.

First transceiver 108a:

The first transceiver 108a may be coupled to the first charging circuit 103a. The first transceiver 108a may include suitable circuitry that may be configured to perform one or more operations. For example, the first transceiver 108a may be configured to receive the one or more first setup requests F1-FN from the first charging circuit 103a. The first transceiver 108a may be further configured to transmit the one or more first setup requests F1-FN to the first chargeable device 104a to establish the first wireless communication. The first transceiver 108a may be further configured to receive the one or more first setup responses FR1-FRN from the first chargeable device 104a based on the one or more first setup requests F1-FN and provide the one or more first setup responses FR1-FRN to the first charging circuit 103a. In one or more embodiments, the first transceiver 108a may include an inductor configured to deliver power and data to a corresponding inductor of the first chargeable device 104a. Examples of the first transceiver 108a may include a radio frequency (RF) transceiver, a wireless transceiver, or the like.

Second transceiver 108b:

The second transceiver 108b may be structurally and functionally similar to the first transceiver 108a. The second transceiver 108b may be coupled to the second charging circuit 103b. The second transceiver 108b may include suitable circuitry that may be configured to perform one or more operations. For example, the second transceiver 108b may be configured to receive the one or more second setup requests S1-SN from the second charging circuit 103b. The second transceiver 108b may be further configured to transmit the one or more second setup requests S1-SN to the second chargeable device 104b to establish the second wireless communication. The second transceiver 108b may be further configured to receive the one or more second setup responses SR1-SRN from the second chargeable device 104b based on the one or more second setup requests S1-SN and provide the one or more second setup responses SR1-SRN to the second charging circuit 103b. Examples of the second transceiver 108b may include a radio frequency (RF) transceiver, a wireless transceiver, or the like. In one or more embodiments, the second transceiver 108b may include an inductor configured to deliver power and data to a corresponding inductor of the second chargeable device 104b.

Although FIG. 1 illustrates that the charging system 102 includes two transceivers (e.g., the first transceiver 108a and the second transceiver 108b), the scope of the present disclosure is not limited to it. In other embodiments, the charging system 102 may include more than two transceivers without deviating from the scope of the present disclosure. In such a scenario, the number of transceivers is equal to the number of charging circuits required to charge the plurality of chargeable devices 104.

Clock generator 110:

The clock generator 110 may be coupled to each of the plurality of charging circuits 103. The clock generator 110 may include suitable circuitry that may be configured to perform one or more operations. For example, the clock generator 110 may be configured to generate a clock signal CS. The clock generator 110 may be further configured to provide the clock signal CS to each of the plurality of charging circuits 103. The provision of the clock signal CS to each of the plurality of charging circuits 103 may ensure that the plurality of charging circuits 103 are synchronous with each other during the establishment of the corresponding wireless communication. Thus, an intermodulation of carrier signals that are required by each of the plurality of charging circuits 103 to communicate with the corresponding chargeable device of the plurality of chargeable devices 104 may be avoided and stability of the wireless communication with the corresponding chargeable devices may be achieved. Further, the first charging circuit 103a and the second charging circuit 103b may generate the one or more first setup requests F1-FN and the one or more second set of requests S1-SN, respectively, based on the clock signal CS. Examples of the clock generator 110 may include a crystal oscillator, a voltage-controlled crystal oscillator, a phase-locked loop clock generator, or the like.

First power source 112:

The first power source 112 may be coupled with each of the plurality of charging circuits 103 of the charging system 102. The first power source 112 may be further configured to provide a power supply PS to each of the plurality of charging circuits 103 to charge the corresponding chargeable device of the plurality of chargeable devices 104, respectively. An example of the first power source 112 may include a battery.

First chargeable device 104a:

The first chargeable device 104a may include a first control circuit 114, a first communication circuit 116, and a second power source 118. The first chargeable device 104a may be an NFC-enabled device configured to communicate with the charging system 102 to engage in the charging process. Examples of the first chargeable device 104a may include a smartphone, a tablet, a laptop, a headphone, hearing aids, or the like.

First control circuit 114:

The first control circuit 114 may be coupled to the first communication circuit 116 and the second power source 118. The first control circuit 114 may include suitable circuitry that may be configured to perform one or more operations. For example, the first control circuit 114 may be configured to receive the one or more first setup requests F1-FN from the first charging circuit 103a by way of the first communication circuit 116. The first control circuit 114 may be further configured to generate the one or more first setup responses FR1-FRN based on the one or more first setup requests F1-FN. The first control circuit 114 may generate the one or more first setup responses FR1-FRN upon successfully decoding the one or more first setup requests F1-FN. The first control circuit 114 may be unable to generate the one or more first setup responses FR1-FRN upon unsuccessful decoding of the one or more first setup responses FR1-FRN. The first control circuit 114 may be further configured to transmit the one or more first setup responses FR1-FRN to the first charging circuit 103a by way of the first communication circuit 116 in the first wireless communication. The first control circuit 114 may be further configured to charge the first chargeable device 104a (e.g., the second power source 118) by way of the first charging circuit 103a. The charging may be based on the first wireless communication being successful with the first charging circuit 103a. Examples of the first control circuit 114 may be a central processing unit (CPU), a graphics processing unit (GPU), a microcontroller, an application-specific integrated circuit (ASIC), or the like.

First communication circuit 116:

The first communication circuit 116 may be coupled to the first control circuit 114. The first communication circuit 116 may include suitable circuitry that may be configured to perform one or more operations. For example, the first communication circuit 116 may be configured to receive the one or more first setup requests F1-FN from the first charging circuit 103a to facilitate the establishment of the first wireless communication with the first charging circuit 103a. The first communication circuit 116 may be further configured to provide the one or more first setup requests F1-FN to the first control circuit 114. The first communication circuit 116 may be further configured to receive the one or more first setup responses FR1-FRN from the first communication circuit 116. The first communication circuit 116 may be further configured to transmit the one or more first setup responses FR1-FRN to the first charging circuit 103a. During the charging of the first chargeable device 104a, the first communication circuit 116 may be further configured to receive the power supply PS from the first charging circuit 103a by way of the first transceiver 108a and provide the power supply PS to the second power source 118. Examples of the first communication circuit 116 may include a radio frequency (RF) transceiver, a wireless transceiver, or the like. In one or more embodiments, the first communication circuit 116 may include an inductor responsive to an electromagnetic field produced by a corresponding inductor of the first charging circuit 103a to produce an induced voltage (a power supply (PS)), which may be used to recharge the second power source 118.

Second Power source 118:

The second power source 118 may be coupled to the first control circuit 114. The second power source 118 may be configured to receive the power supply PS from the first charging circuit 103a by way of the first control circuit 114. An example of the second power source 118 may include a battery. The first chargeable device 104a may be configured to store charge based on the power supply PS provided to the second power source 118. In a scenario, when a power level of the second power source 118 may be below a threshold power level, a user that owns the first chargeable device 104a may arrive in the vicinity of the charging system 102 to wirelessly charge the first chargeable device 104a.

Second chargeable device 104b:

The second chargeable device 104b may include a second control circuit 120, a second communication circuit 122, and a third power source 124. The second chargeable device 104b may be an NFC enabled device to facilitate the charging process by the charging system 102. Examples of the second chargeable device 104b may include a smartphone, a tablet, a laptop, a headphone, hearing aids, or the like.

Second control circuit 120:

The second control circuit 120 may be coupled to the second communication circuit 122 and the third power source 124. The second control circuit 120 may include suitable circuitry that may be configured to perform one or more operations. For example, the second control circuit 120 may be configured to receive the one or more second setup requests S1-SN from the second charging circuit 103b by way of the second communication circuit 122. The second control circuit 120 may be further configured to generate the one or more second setup responses SR1-SRN in a similar manner as the first control circuit 114. The second control circuit 120 may be further configured to transmit the one or more second setup responses SR1-SRN to the second charging circuit 103b by way of the second communication circuit 122. The second control circuit 120 may be further configured to charge the second chargeable device 104b (e.g., the third power source 124) by way of the second charging circuit 103b. The charging may be based on the second wireless communication being successful with the second charging circuit 103b. Examples of the second control circuit 120 may be a central processing unit (CPU), a graphics processing unit (GPU), a microcontroller, an application-specific integrated circuit (ASIC), or the like.

Second communication circuit 122:

The second communication circuit 122 may be coupled to the second control circuit 120. The second communication circuit 122 may include suitable circuitry that may be configured to perform one or more operations. For example, the second communication circuit 122 may be configured to receive the one or more second setup requests S1-SN from the second charging circuit 103b (e.g., the second transceiver 108b) to facilitate the establishment of the second wireless communication with the second charging circuit 103b. The second communication circuit 122 may be further configured to provide the one or more second setup requests S1-SN to the second control circuit 120. The second communication circuit 122 may be further configured to receive the one or more second setup responses SR1-SRN from the second communication circuit 122. The second communication circuit 122 may be further configured to transmit the one or more second setup responses SR1-SRN to the second charging circuit 103b. The second communication circuit 122 may be further configured to receive the power supply PS from the second charging circuit 103b during the charging of the second chargeable device 104b and provide the power supply PS to the third power source 124. Examples of the second communication circuit 122 may include a radio frequency (RF) transceiver, a wireless transceiver, or the like. In one or more embodiments, the second communication circuit 122 may be include an inductor responsive to an electromagnetic field produced by a corresponding inductor of the second charging circuit 103b to produce an induced voltage (a power supply (PS)), which may be used to recharge the third power source 124.

Third Power source 124:

The third power source 124 may be coupled to the second control circuit 120. The third power source 124 may be configured to receive the power supply PS from the second charging circuit 103b by way of the second control circuit 120. An example of the third power source 124 may include a battery. The second chargeable device 104b may charge based on the power supply PS provided to the third power source 124.

FIG. 2 illustrates a block diagram of the first charging circuit 103a in accordance with an embodiment of the present disclosure. The first charging circuit 103a may include an NFC control circuit 202, a memory 204, a random number generator 206, a threshold configuring circuit 208, and the first error counter 210. The NFC control circuit 202, the random number generator 206, the threshold configuring circuit 208, and the first error counter 210 may interact with each other by way of a communication channel 212. Examples of the communication channel 212 may include a serial peripheral interface (SPI), an inter-integrated channel (I2C), or the like.

NFC control circuit 202:

The NFC control circuit 202 may include suitable circuitry that may be configured to perform one or more operations. For example, the NFC control circuit 202 may be configured to detect the first chargeable device 104a within the proximity of the charging system 102. The NFC control circuit 202 may generate and provide one or more signals to the first transceiver 108a to generate an electromagnetic field and may detect the first chargeable device 104a upon detecting a change in the electromagnetic field within the proximity. The NFC control circuit 202 may be further configured to establish the first wireless communication upon determining that the first chargeable device 104a is within the proximity. To establish the first wireless communication, the NFC control circuit 202 may be further configured to generate the one or more first setup requests F1-FN. The NFC control circuit 202 may be further configured to transmit the one or more first setup requests F1-FN to the first chargeable device 104a by way of the first transceiver 108a. In some embodiments, the NFC control circuit 202 may be further configured to await, based on the transmission of the one or more first setup requests F1-FN, the one or more first setup responses FR1-FRN from the first chargeable device 104a for the first time period.

In some scenarios, the NFC control circuit 202 may be further configured to receive the one or more first setup responses FR1-FRN from the first chargeable device 104a in the first time period, based on the one or more first setup requests F1-FN. The NFC control circuit 202 may be further configured to initiate decoding of the one or more first setup responses FR1-FRN in response to the reception of the one or more first setup responses FR1-FRN. Further, the NFC control circuit 202 may detect the error in the first wireless communication based on a failure to decode the one or more first setup responses FR1-FRN. In further scenarios, the NFC control circuit 202 may detect the error in the first wireless communication based on a failure of reception of the one or more first setup responses FR1-FRN by the NFC control circuit 202 at the end of the first time period. The failure of reception of the one or more first setup responses FR1-FRN may be based on the first chargeable device 104a being unable to generate the one or more first setup responses FR1-FRN due to the cross-talk interference or other interference.

The NFC control circuit 202 may be further configured to initiate the execution of a retry algorithm in response to the detection of the error in the first wireless communication. The retry algorithm may be stored in a memory (such as the memory 204) associated with the first charging circuit 103a. The first charging circuit 103a may reestablish the first wireless communication based on the execution of the retry algorithm. Upon initiating the execution of the retry algorithm, the NFC control circuit 202 may be further configured to increment the first error counter 210 upon detecting the error in the first wireless communication. The NFC control circuit 202 may be further configured to compare the count CO of the first error counter 210 with the threshold value TV and determine whether the count CO is below the threshold value TV. The NFC control circuit 202 may be further configured to receive the threshold value TV from the threshold configuring circuit 208 prior to the establishment of the first wireless communication. The NFC control circuit 202 may be further configured to store the threshold value TV in a memory associated with the NFC control circuit 202.

In one embodiment, NFC control circuit 202 may generate the first delay value FD upon determining that the count CO is lower than or equal to the threshold value TV. The NFC control circuit 202 may be further configured to receive the first delay value FD from the random number generator 206 and determine the first time delay based on the first delay value FD and the time duration.

The NFC control circuit 202 may be further configured to reestablish the first wireless communication after the first time delay. In one embodiment, the NFC control circuit 202 may be configured to charge the first chargeable device 104a based on the first wireless communication being successful upon reestablishment by providing the power supply PS from the first power source 112 to the first chargeable device 104a. The NFC control circuit 202 may be further configured to receive the clock signal CS from the clock generator 110.

In further embodiments, when the count CO of the first error counter 210 is determined to exceed the threshold value TV, the NFC control circuit 202 may be further configured to reboot. The NFC control circuit 202 may be further configured to reset the count CO of the first error counter 210 to the default value and may detect whether the first chargeable device 104a is within the proximity of the charging system 102. Upon rebooting, the NFC control circuit 202 may be further configured to establish the first wireless communication with the first chargeable device 104a. Examples of the NFC control circuit 202 may be a central processing unit (CPU), a graphics processing unit (GPU), a microcontroller, an application-specific integrated circuit (ASIC), or the like.

Memory 204:

The memory 204 may include suitable logic, circuitry, and /or interfaces for storing data. For example, the memory 204 may be configured to store the retry algorithm. Examples of the memory 204 may include a random-access memory (RAM), a read only memory (ROM), a hard disk drive (HDD), a flash memory, a solid-state memory, and the like.

Random number generator 206:

The random number generator 206 may include suitable circuitry that may be configured to perform one or more operations. For example, the random number generator 206 may be configured to generate the first delay value FD based on the determination that the count CO is less than the threshold value TV. The random number generator 206 may randomly generate the first delay value FD. The random number generator 206 may generate the first delay value FD by executing a random number-generating algorithm. The random number generator 206 may provide the first delay value FD to the NFC control circuit 202 for reestablishing the first wireless communication.

The random number-generating algorithm may include one or more mathematical operations, such as addition and bitwise operations, to generate the first delay value FD. The random number generating algorithm may be based on the type of random number generating standard that is followed to generate the first delay value FD. Examples of random number-generating algorithms may include a linear congruential generator, a Mersenne twister, an Xor shift, or the like. In one or more embodiments, the first delay value FD may be an integer value.

Threshold configuring circuit 208:

The threshold configuring circuit 208 may include suitable circuitry that may be configured to perform one or more operations. For example, the threshold configuring circuit 208 may be configured to define the threshold value TV that may indicate the total number of attempts that may be acceptable to reestablish the first wireless communication by the NFC control circuit 202. The threshold configuring circuit 208 may be configured to provide the threshold value TV to the NFC control circuit 202 prior to the establishment of the first wireless communication. The threshold configuring circuit 208 may define the threshold value TV based on a type of chargeable device (such as the first chargeable device 104a) that may be identified upon initial establishment of the first wireless communication.

First error counter 210:

The first error counter 210 may include suitable circuitry that may be configured to perform one or more operations. For example, the first error counter 210 may be configured to store the count CO. The count CO of the first error counter 210 may be incremented by the NFC control circuit 202 upon detecting the error in the first wireless communication. When the count CO of the first error counter 210 may be less than or equal to the threshold value TV, the NFC control circuit 202 may generate the first delay value FD. Further, based on the determination that the count CO of the first error counter 210 may exceed the threshold value TV, the NFC control circuit 202 may be further configured to reboot the first charging circuit 103a. Upon rebooting, the NFC control circuit 202 may be further configured to reset the first error counter 210.

In one embodiment, the NFC control circuit 202 may reestablish the first wireless communication after a time delay associated with one of a range of delay values that may be configured by the NFC control circuit 202 based at least in part on the first delay value FD. In a scenario, the NFC control circuit 202 may configure the range of delay values based on a type of chargeable device. In an example, the range of delay values may include a delay value for earphones as the chargeable device and a delay value for hearing pads as the chargeable device such that the delay value of earphones may be lower than the delay value of hearing pads. In one or more embodiments, a delay value for the device may be determined from the range of delay values, and then the time delay may be determined by a mathematical operation (multiplication, addition, etc.) based on the first delay value FD and the determined delay value. The NFC control circuit 202 may reestablish the first wireless communication after the determined time delay.

Although it is shown that the random number-generating algorithm may be executed by the random number generator 206, in further embodiments, the NFC control circuit 202 may be configured to execute the random number-generating algorithm.

FIGS. 3A-3C are timing diagrams 300A-300C that illustrate exemplary scenarios of simultaneously charging chargeable devices in accordance with an embodiment of the present disclosure.

FIG. 3A is a timing diagram 300A that illustrates an exemplary scenario of the effect of cross-talk interference on the first wireless communication.

At time instance T0, the first charging circuit 103a may establish the first wireless communication with the first chargeable device 104a by transmitting a first setup request F1 of the one or more first setup requests F1-FN to the first chargeable device 104a. During time instance T0 and T1, the first charging circuit 103a may receive a first setup response FR1 from the first chargeable device 104a, in response to the first setup request F1.

At time instance T1, the first charging circuit 103a may transmit the second setup request F2 of the one or more first setup requests F1-FN. Thus, the first chargeable device 104a may receive the second setup request F2 and generate the second setup response FR2. During time instance T1-T2, while the second setup response FR2 is being transmitted to the first charging circuit 103a, cross-talk interference may occur due to the second wireless communication that is being established by the second charging circuit 103b with the second chargeable device 104b. The cross-talk interference may result in loss of the second setup response FR2. Thus, the first charging circuit 103a may detect a failure of reception of the second setup response FR2 in the first time period. The first charging circuit 103a may thus detect the error in the first wireless communication. The second wireless communication may remain unaffected due to the first wireless communication. Thus, the one or more second setup requests S1-SN (such as a fourth setup request S1 of the one or more second setup requests S1-SN and a fifth setup request S2 of the one or more second setup requests S1-SN) and the one or more second setup responses SR1-SRN (such as a fourth setup response SR1 of the one or more second setup responses SR1-SRN and a fifth setup response SR2 of the one or more second setup responses SR1-SRN) are transmitted and received by the second charging circuit 103b, respectively.

At time instance T2, the first charging circuit 103a may reestablish the first wireless communication after the first time delay FTD upon detecting the error during time instance T1-T2. The first time delay FTD may be indicative of the time interval between the first time instance T1 and the second time instance T2. The first charging circuit 103a may determine the first time delay FTD based on the first delay value FD and the time duration that may be required by the first charging circuit 103a to perform one or more tasks to reestablish the first wireless communication. The first time delay FTD may be a multiple of the time duration based on the first delay value FD. The first charging circuit 103a may transmit the one or more first setup requests F1-FN (such as the first setup request F1 and the second setup request F2) to the first chargeable device 104a. During time instance T2-T3, the first charging circuit 103a may receive the one or more first setup responses FR1 and FR2 in response to the one or more first setup requests F1-FN. Upon successfully decoding the one or more first setup responses FR1 and FR2, the first charging circuit 103a may detect successful reestablishment of the first wireless communication and charge the first chargeable device 104a based on the successful reestablishment of the first wireless communication.

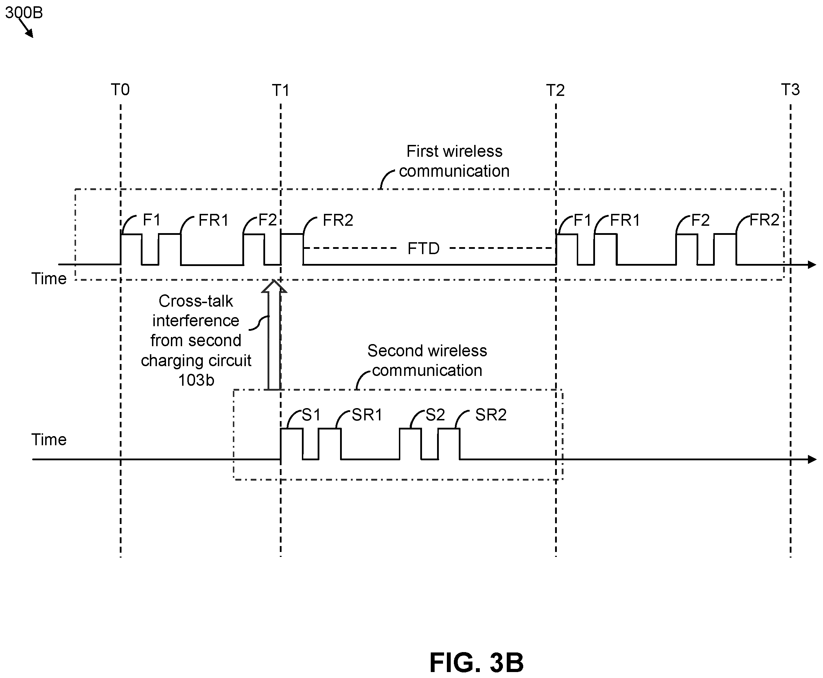

FIG. 3B is a timing diagram 300B that illustrates further exemplary scenarios of the effect of cross-talk interference on the first wireless communication. At time instance T0, the first charging circuit 103a may establish the first wireless communication with the first chargeable device 104a by transmitting the first setup request F1 of the one or more first setup requests F1-FN to the first chargeable device 104a. During time instance T0 and T1, the first charging circuit 103a may receive the first setup response FR1 from the first chargeable device 104a, in response to the first setup request F1. Further, the first charging circuit 103a may transmit the second setup request F2.

At time instance T1, while the second setup response FR2 is being transmitted to the first charging circuit 103a, cross-talk interference may occur due to the second wireless communication thereby affecting the quality of the second setup response FR2 (corrupted response). The first charging circuit 103a may receive the second setup response FR2 of the one or more first setup responses FR1-FRN. As the first charging circuit 103a may be unable to decode the second setup response FR2 that may be affected due to cross-talk, the first charging circuit 103a may thus detect the error in the first wireless communication.

During time instance T1-T2, the second wireless communication may remain unaffected due to the first wireless communication. Thus, the one or more second setup requests S1-SN (such as the fourth setup request S1 and the fifth setup request S2) and the one or more second setup responses SR1-SRN (such as the fourth setup response SR1 and the fifth setup response SR2) are transmitted and received by the second charging circuit 103b.

At time instance T2, the first charging circuit 103a may reestablish the first wireless communication after the first time delay FTD upon detecting the error at the time instance T1. The first time delay FTD may be indicative of the time interval between the first time instance T1 and the second time instance T2. The first charging circuit 103a may transmit the one or more first setup requests F1-FN (such as the first setup request F1 and the first setup request F2) to reestablish the first wireless communication.

During time instance T2-T3, the first charging circuit 103a may receive the one or more first setup responses FR1 and FR2 in response to the one or more first setup requests F1-FN. Thus, the first charging circuit 103a may detect successful reestablishment of the first wireless communication and charge the first chargeable device 104a based on the successful reestablishment of the first wireless communication.

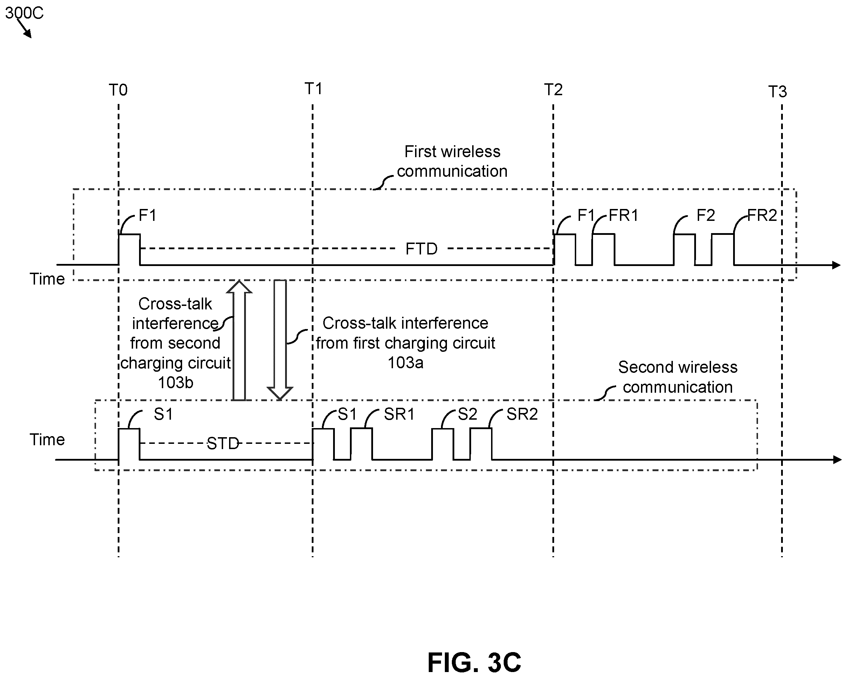

FIG. 3C is a timing diagram 300C that illustrates further exemplary scenarios of the effect of cross-talk interference on the first wireless communication and the second wireless communication. At time instance T0, the first charging circuit 103a and the second charging circuit 103b may establish the first wireless communication and the second wireless communication by transmitting the first setup request F1 and the fourth setup request S1 to the first chargeable device 104a and the second chargeable device 104b, respectively. During time instance T0-T1, while the first setup request F1 and the fourth setup request S1 is being transmitted to the first chargeable device 104a and the second chargeable device 104b, mutual cross-talk interference may occur thereby resulting in loss of the first setup request F1 and the fourth setup request S1. Thus, the first chargeable device 104a and the second chargeable device 104b may be unable to generate the first setup response FR1 and the fourth setup response SR1, respectively. Based on the failure to receive the first setup response FR1 and the fourth setup response SR1 in the first time period and the second time period, respectively, the first charging circuit 103a and the second charging circuit 103b may thus detect the error in the first wireless communication and the second wireless communication, respectively.

At time instance T1, the second charging circuit 103b may reestablish the second wireless communication after the second time delay STD upon detecting the error during the time instance T0-T1. The second time delay STD may be indicative of the time interval between the time instance T0 and the time instance T1. The second charging circuit 103b may determine the second time delay STD by multiplying the second delay value SD (e.g., one of the set of delay values) and the time duration that may be required by the second charging circuit 103b to perform one or more tasks to reestablish the second wireless communication.

During time instance T1-T2, the second charging circuit 103b may transmit the one or more second setup requests S1-SN (such as the fourth setup request S1 and the fifth setup request S2) to reestablish the second wireless communication. Further, the second charging circuit 103b may receive the one or more second setup responses SR1-SRN (such as the fourth setup response SR1 and the fifth setup response SR2). Upon successfully decoding the one or more second setup responses SR1-SRN, the second charging circuit 103b may detect that the second wireless communication has been successfully reestablished and may initiate the charging of the second chargeable device 104b.

At time instance T2, the first charging circuit 103a may reestablish the first wireless communication after the first time delay FTD upon detecting the error in the first wireless communication. The first time delay FTD may be indicative of the time interval between the time instance T1 and the time instance T3. The second time delay STD and the first time delay FTD may be different based on the second delay value SD and the first delay value FD, respectively. Thus, the effects of cross-talk interference due to reestablishment of the first wireless communication and the second wireless communication are mitigated.

During time instance T2-T3, the first charging circuit 103a may transmit the one or more first setup requests F1-FN (such as the first setup request F1 and the second setup request F2) to reestablish the first wireless communication. The first charging circuit 103a may receive the one or more first setup responses FR1 and FR2 (such as the first setup response FR1 and the second setup response FR2) in response to the one or more first setup requests F1-FN. Thus, the first charging circuit 103a may detect successful reestablishment of the first wireless communication and charge the first chargeable device 104a based on the successful reestablishment of the first wireless communication. Similarly, the second charging circuit 103b may detect successful reestablishment of the second wireless communication and charge the second chargeable device 104b based on the successful reestablishment of the second wireless communication.

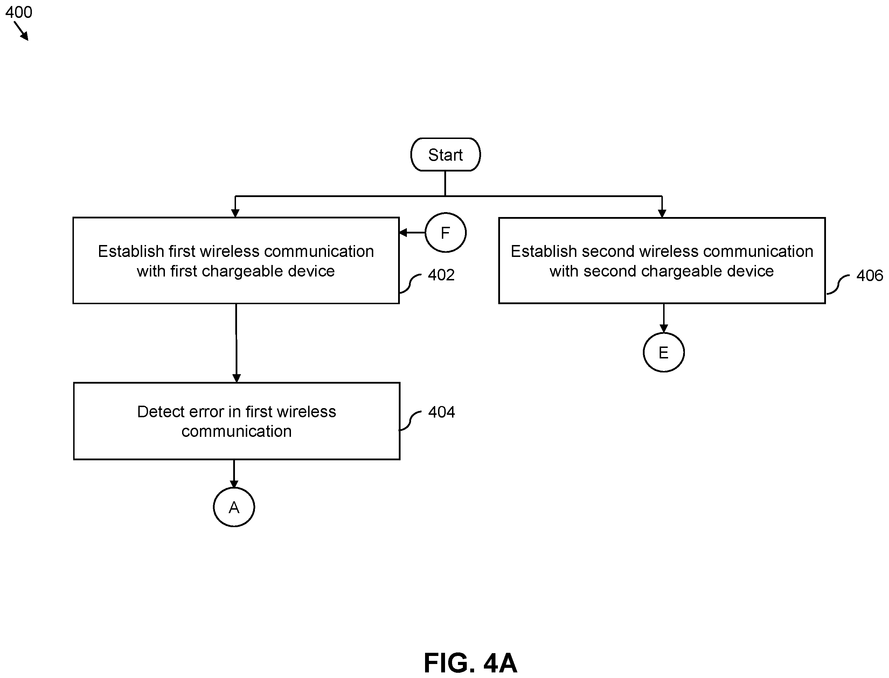

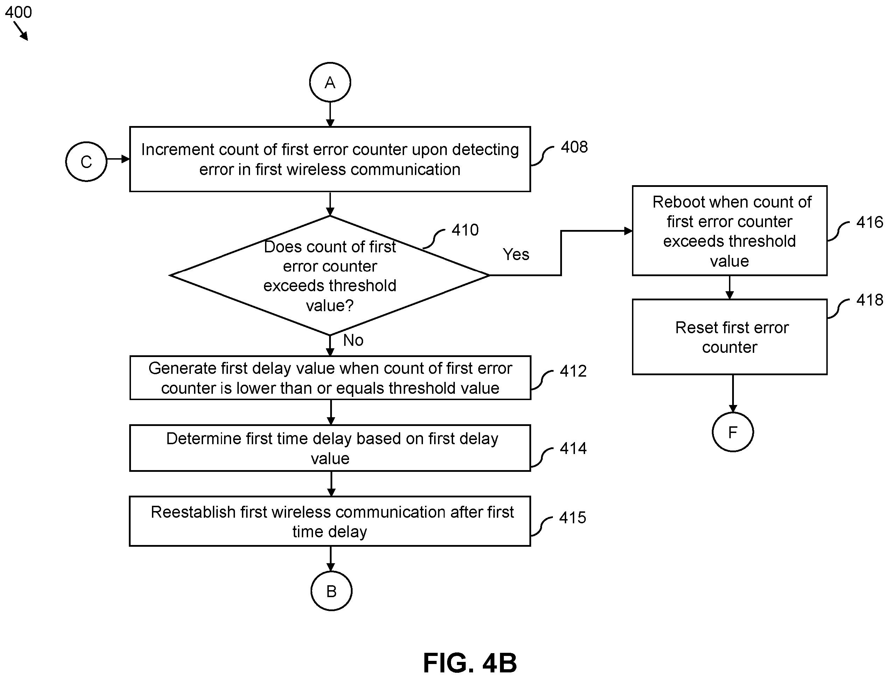

FIGS. 4A and 4B, collectively, represent a flowchart 400 that illustrates a wireless charging method in accordance with an embodiment of the present disclosure. The flowchart 400 describes the operations performed by the first charging circuit 103a and the second charging circuit 103b. For the sake of simplicity of explaining FIGS. 4A and 4B, it is assumed that the first wireless communication may be affected by the cross-talk interference due to the second wireless communication. Further, it will be understood by a person skilled in the art that the effects of cross-talk interference affecting the second wireless communication due to the first wireless communication may be mitigated in a manner similar to mitigating the effects of cross-talk interference affecting the first wireless communication.

Referring to FIG. 4A, at step 402, the first charging circuit 103a may establish the first wireless communication with the first chargeable device 104a upon detecting the first chargeable device 104a to be within the proximity of the charging system 102. The first charging circuit 103a may transmit the one or more first setup requests F1-FN to the first chargeable device 104a by way of the first transceiver 108a to establish the first wireless communication. Upon transmitting the one or more first setup requests F1-FN to the first chargeable device 104a, the first chargeable device 104a may await reception of the one or more first setup responses FR1-FRN from the first chargeable device 104a until the end of the first time period.

At step 404, the first charging circuit 103a may detect the error in the first wireless communication based on the one or more first setup requests F1-FN. The error may be detected based on at least one of the failure of decoding of the one or more first setup responses FR1-FRN and the failure of reception of the one or more first setup responses FR1-FRN within the first time period.

At step 406, the second charging circuit 103b may establish the second wireless communication with the second chargeable device 104b. The second charging circuit 103b may establish the second wireless communication upon detecting the second chargeable device 104b to be within the proximity of the charging system 102. For the sake of simplicity of the ongoing description, it is assumed that the second wireless communication is successful.

Referring now to FIG. 4B, at step 408, the first charging circuit 103a may increment the count CO of the first error counter 210 upon detecting the error in the first wireless communication. At step 410, the first charging circuit 103a may determine whether the count CO of the first error counter 210 exceeds the threshold value TV upon incrementing the first error counter 210. If it is determined that the count CO of the first error counter is lower than or equal to the threshold value TV, step 412 is executed. At step 412, the first charging circuit 103a may generate the first delay value FD when the count CO of the first error counter 210 is lower than or equal to the threshold value TV. The first charging circuit 103a may generate the first delay value FD by executing the random number-generating algorithm. At step 414, the first charging circuit 103a may determine the first time delay FTD based on the first delay value FD and the time duration that may required by the first charging circuit 103a to reestablish the first wireless communication. At step 415, the first charging circuit 103a may reestablish the first wireless communication after the first time delay FTD.

At step 410, if it is determined that the count CO of the first error counter 210 exceeds the threshold value TV, step 416 is executed. At step 416, the first charging circuit 103a may reboot when the count CO of the first error counter 210 exceeds the threshold value TV. At step 418, the first charging circuit 103a may reset the first error counter 210 upon rebooting. Upon rebooting, step 402 is executed.

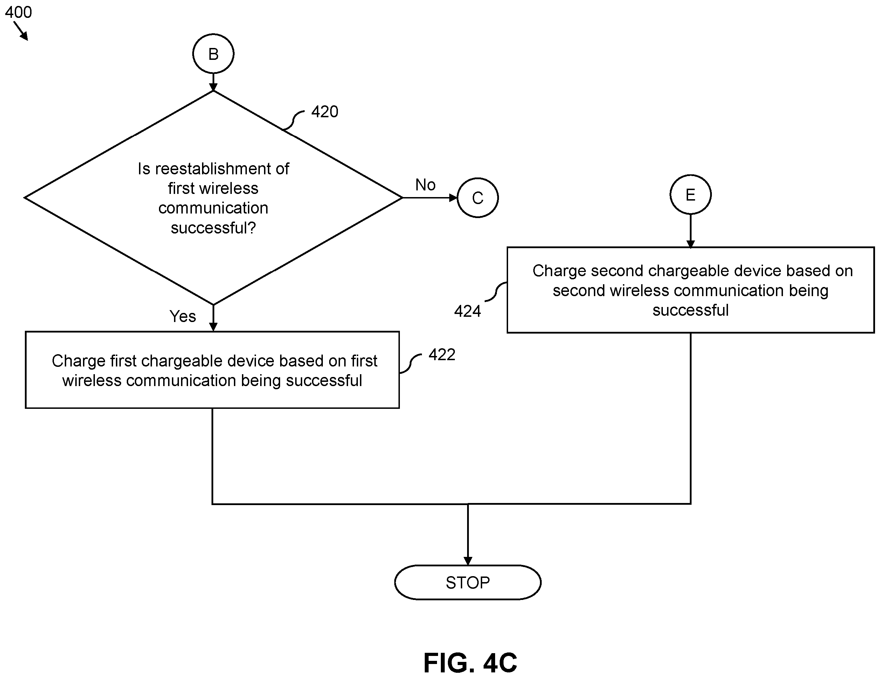

Referring now to FIG. 4C, at step 420, the first charging circuit 103a may determine whether the reestablishment of the first wireless communication is successful. If it is determined that reestablishment of the first wireless communication is successful, step 422 is executed. At step 422, the first charging circuit 103a may charge the first chargeable device 104a based on the reestablishment of the first wireless communication being successful. At step 420, if it is determined that reestablishment of the first wireless communication has failed, step 408 is executed. After step 406, step 424 is executed. At step 424, the second charging circuit 103b may charge the second chargeable device 104b based on the second wireless communication being successful.

Thus, the present disclosure significantly reduces the error probability due to effects of cross-talk interference in the first wireless communication between the first charging circuit 103a and the first chargeable device 104a by randomly reestablishing the wireless communication between one or more charging circuits (e.g., the second charging circuit 103b) and the corresponding chargeable devices (e.g., the second chargeable device 104b) based on corresponding delay values. Further, the charging system 102 refrains from including any additional hardware to physically shield the charging circuits thereby reducing cost of the charging system 102. In addition, the overall charging efficiency of the charging system 102 of the present disclosure is improved over conventional techniques that suggest charging each device one at a time or manage the charging timing for each device by coupling each charging circuit to a control circuit of the conventional charging system.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

In an embodiment of the present disclosure, a wireless charging system is disclosed. The wireless charging system may include a charging circuit. The charging circuit may be configured to establish a wireless communication with a chargeable device, wherein the wireless communication may be associated with charging of the chargeable device. The charging circuit may be further configured to detect an error in the wireless communication. The charging circuit may be further configured to generate a delay value based on the error detected in the wireless communication. The charging circuit may be further configured to reestablish, after a time delay, the wireless communication with the chargeable device, wherein the time delay may be based on the delay value.

In some embodiments, wherein the charging circuit may further comprise an error counter, and wherein upon detecting the error in the wireless communication, the charging circuit may be further configured to increment a count of the error counter.

In some embodiments, the charging circuit may be further configured to compare a count of the error counter with a threshold value. The charging circuit may be further configured to determine whether the count of the error counter is below the threshold value based on the comparison.

In some embodiments, wherein based on the determination that the count of the error counter is less than or equal to the threshold value, the charging circuit may generate the delay value.

In some embodiments, wherein based on the determination that the count of the error counter may exceed the threshold value, the charging circuit may be further configured to reboot.

In some embodiments, wherein upon rebooting, the charging circuit may be further configured to reset the error counter.

In some embodiments, wherein based on the wireless communication being successful upon reestablishment, the charging circuit may be further configured to charge the chargeable device.

In some embodiments, wherein to establish the wireless communication, the charging circuit may be further configured to generate one or more setup requests. The charging circuit may be further configured to transmit the one or more setup requests to the chargeable device.

In some embodiments, wherein the charging circuit may be further configured to await, based on the transmission of the one or more setup requests, one or more setup responses from the chargeable device for a time period, and wherein the charging circuit may detect the error in the wireless communication based on a failure of reception of the one or more setup responses at an end of the time period.

In some embodiments, the charging circuit may be further configured to receive one or more setup responses from the chargeable device in response to the transmission of the one or more setup requests. The charging circuit may be further configured to initiate decoding of the one or more setup responses.

In some embodiments, the error detected in the wireless communication may be indicative of an error in decoding the one or more setup responses.

In some embodiments, the charging circuit may comprise a random number generator, wherein the random number generator may be configured to generate the delay value.

In some embodiments, the charging circuit may be further configured to determine the time delay further based on a time duration associated with the reestablishment of the wireless communication.

In some embodiments, the delay value may be randomly generated.

In some embodiments, the wireless charging system may further comprise a set of charging circuits that may be configured to control charging of a corresponding set of chargeable devices based on a set of delay values, wherein the delay value may be different than the set of delay values.

In some embodiments, the wireless charging system may further comprise a clock generator that may be coupled to the charging circuit and the set of charging circuits, wherein the clock generator may be configured to generate a clock signal. The clock generator may be further configured to provide the clock signal to each of the charging circuit and the set of charging circuits, wherein each of the charging circuit and the set of charging circuits may be synchronized based on the clock signal.

In some embodiments, the error may be indicative of cross-talk interference in the wireless communication from at least one of the set of charging circuits.

In some embodiments, the wireless communication may be a near field communication.

In further embodiments of the present disclosure, a wireless charging method is disclosed. The wireless charging method may comprise establishing, by a charging circuit, a wireless communication with a chargeable device, wherein the wireless communication may be associated with charging of the chargeable device. The wireless charging method may further comprise detecting, by the charging circuit, an error in the wireless communication. The wireless charging method may further comprise generating, by the charging circuit, a delay value based on the error detected in the wireless communication. The wireless charging method may further comprise reestablishing, by the charging circuit after a time delay, the wireless communication with the chargeable device, wherein the time delay may be based on the delay value.

In some embodiments, the wireless charging method may further comprise incrementing, by the charging circuit, a count of an error counter of the charging circuit upon detecting the error in the wireless communication. The wireless charging method may further comprise comparing, by the charging circuit, the count of the error counter with a threshold value. The wireless charging method may further comprise determining, by the charging circuit whether the count of the error counter is below the threshold value based on the comparison, wherein the charging circuit may generate the delay value based on the determination that the count of the error counter is less than or equal to the threshold value, and wherein the delay value may be randomly generated.

## Claims

1. A wireless charging system (102) comprising:
   a charging circuit (103) configured to:

   establish a wireless communication with a chargeable device (104), wherein the wireless communication is associated with charging of the chargeable device;
   detect an error in the wireless communication;
   generate a delay value based on the error detected in the wireless communication; and
   reestablish, after a time delay, the wireless communication with the chargeable device, wherein the time delay is based on the delay value.

2. The wireless charging system of claim 1, wherein the charging circuit (103) further comprises an error counter, and wherein upon detecting the error in the wireless communication, the charging circuit is further configured to increment a count of the error counter.

3. The wireless charging system of claim 2, wherein the charging circuit (103) is further configured to:

   compare the count of the error counter with a threshold value (TV);
   determine whether the count of the error counter is below the threshold value based on the comparison; and
   when the count of the error counter is less than or equal to the threshold value (TV), the charging circuit generates the delay value.

4. The wireless charging system of claim 3, wherein based on the determination that the count of the error counter exceeds the threshold value (TV), the charging circuit is further configured to:

   reboot; and
   reset the error counter.

5. The wireless charging system of any preceding claim, wherein based on the wireless communication being successful upon reestablishment, the charging circuit (103) is further configured to charge the chargeable device (104).

6. The wireless charging system of any preceding claim, wherein to establish the wireless communication, the charging circuit is further configured to:

   generate one or more setup requests; and
   transmit the one or more setup requests to the chargeable device.

7. The wireless charging system of claim 6, wherein the charging circuit is further configured to await, based on the transmission of the one or more setup requests, one or more setup responses from the chargeable device for a time period, and wherein the charging circuit detects the error in the wireless communication based on a failure of reception of the one or more setup responses at an end of the time period.

8. The wireless charging system of claim 6 or 7, wherein the charging circuit is further configured to:

   receive one or more setup responses from the chargeable device in response to the transmission of the one or more setup requests; and
   initiate decoding of the one or more setup responses; and
   wherein the error detected in the wireless communication is indicative of an error in decoding the one or more setup responses.

9. The wireless charging system of any preceding claim, wherein the charging circuit comprises a random number generator, wherein the random number generator is configured to generate the delay value.

10. The wireless charging system of any preceding claim, wherein the charging circuit is further configured to determine the time delay further based on a time duration associated with the reestablishment of the wireless communication.

11. The wireless charging system of any preceding claim, wherein the delay value is randomly generated.

12. The wireless charging system of any preceding claim, further comprising a set of charging circuits (103) that are configured to control charging of a corresponding set of chargeable devices (104) based on a set of delay values, wherein the delay value is different than the set of delay values.

13. The wireless charging system of claim 12, the wireless charging system further comprising a clock generator (110) coupled to the charging circuit (103) and the set of charging circuits, wherein the clock generator is further configured to:

   generate a clock signal (CS); and
   provide the clock signal to each of the charging circuit and the set of charging circuits, wherein each of the charging circuit and the set of charging circuits are synchronized based on the clock signal; and
   wherein the error is indicative of cross-talk interference in the wireless communication from at least one of the set of charging circuits.

14. A wireless charging method, comprising:

   establishing, by a charging circuit, a wireless communication with a chargeable device, wherein the wireless communication is associated with charging of the chargeable device;
   detecting, by the charging circuit, an error in the wireless communication;
   generating, by the charging circuit, a delay value based on the error detected in the wireless communication; and
   reestablishing, by the charging circuit after a time delay, the wireless communication with the chargeable device, wherein the time delay is based on the delay value.

**15.** The wireless charging method of claim 14, further comprising:

incrementing, by the charging circuit, a count of an error counter of the charging circuit upon detecting the error in the wireless communication;

comparing, by the charging circuit, the count of the error counter with a threshold value; and

determining, by the charging circuit, whether the count of the error counter is below the threshold value based on the comparison, wherein the charging circuit generates the delay value based on the determination that the count of the error counter is less than or equal to the threshold value, and wherein the delay value is randomly generated.

FIG. 1

**FIG. 2**

EP 4 687 262 A1

FIG. 3A

**FIG. 3B**

FIG. 3C

EP 4 687 262 A1

400

```
                        ┌─────────┐
                        │  Start  │
                        └────┬────┘
        ┌────────────────────┼────────────────────┐
        ▼                    │                     ▼
┌────────────────────┐ (F)          ┌────────────────────────┐
│ Establish first    │◄──           │ Establish second       │
│ wireless           │              │ wireless communication │
│ communication with │              │ with second            │
│ first chargeable   │──402         │ chargeable device      │──406
│ device             │              │                        │
└────────┬───────────┘              └───────────┬────────────┘
         ▼                                      ▼
┌────────────────────┐                         (E)
│ Detect error in    │──404
│ first wireless     │
│ communication      │
└────────┬───────────┘
         ▼
        (A)
```

**FIG. 4A**

EP 4 687 262 A1

400

FIG. 4B

EP 4 687 262 A1

FIG. 4C

EP 4 687 262 A1

Europäisches
Patentamt
European
Patent Office
Office européen
des brevets

# EUROPEAN SEARCH REPORT

**Application Number**

EP 25 19 2356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/064247 A1 (VITESCO TECH GMBH [DE]) 2 April 2020 (2020-04-02) | 1,5-14 | INV. H02J7/00 H02J50/10 H02J50/80 |
| Y | * page 3, line 24 - page 23, line 20; figures 1-12 * | 2-4,15 | |
| Y | US 2020/083747 A1 (HUANG REX PIUS [NZ] ET AL) 12 March 2020 (2020-03-12) * paragraph [0051] - paragraph [0065]; figures 1-7 * | 2-4,15 | |
| A | US 2018/069419 A1 (VON NOVAK III WILLIAM HENRY [US] ET AL) 8 March 2018 (2018-03-08) * paragraph [0006] * | 6,7 | |
| A | CN 111 527 708 A (ENERGOUS CORP) 11 August 2020 (2020-08-11) * paragraph [0125] - paragraph [0132] * | 12,13 | |
| A | CN 117 294 032 A (XIAMEN CHIPSUN TECH CO LTD) 26 December 2023 (2023-12-26) * paragraph [0059] - paragraph [0060] * | 1-15 | |

**TECHNICAL FIELDS SEARCHED (IPC)**

H02J

The present search report has been drawn up for all claims

| Place of search | Date of completion of the search | Examiner |
|---|---|---|
| Munich | 8 December 2025 | Dudoignon, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 2356

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | Publication date | Patent family member(s) | Publication date |
|---|---|---|---|
| WO 2020064247 A1 | 02-04-2020 | DE 102018216468 B3 | 24-12-2019 |
| | | WO 2020064247 A1 | 02-04-2020 |
| US 2020083747 A1 | 12-03-2020 | NONE | |
| US 2018069419 A1 | 08-03-2018 | CN 107078522 A | 18-08-2017 |
| | | CN 111525710 A | 11-08-2020 |
| | | EP 3202009 A1 | 09-08-2017 |
| | | JP 6625623 B2 | 25-12-2019 |
| | | JP 2017534234 A | 16-11-2017 |
| | | US 2016099604 A1 | 07-04-2016 |
| | | US 2018069419 A1 | 08-03-2018 |
| | | WO 2016053616 A1 | 07-04-2016 |
| CN 111527708 A | 11-08-2020 | CN 111527708 A | 11-08-2020 |
| | | CN 115133663 A | 30-09-2022 |
| | | EP 3704800 A1 | 09-09-2020 |
| | | JP 7386175 B2 | 24-11-2023 |
| | | JP 2021509570 A | 25-03-2021 |
| | | KR 20200094146 A | 06-08-2020 |
| | | US 2019131827 A1 | 02-05-2019 |
| | | US 2023010476 A1 | 12-01-2023 |
| | | US 2024258840 A1 | 01-08-2024 |
| | | WO 2019089568 A1 | 09-05-2019 |
| CN 117294032 A | 26-12-2023 | NONE | |

EPO FORM P0459

For more details about this annex : see Official Journal of the European Patent Office, No. 12/82